# EUROPÄISCHE PATENTANMELDUNG

(11) **EP 4 512 572 A1**
(43) Veröffentlichungstag der Anmeldung: **26.02.2025**
(21) Anmeldenummer: 24189377.5
(22) Anmeldetag: 18.07.2024
(51) Int. Cl.: B23P 19/033, B23P 19/04, F16B 4/00, B29C 65/64, B29C 65/00

(54) **VORRICHTUNG UND VERFAHREN ZUM KRAFTSCHLÜSSIGEN VERBINDEN EINES PROFILS MIT EINEM BAUTEIL**

(30) Priorität: 18.07.2023 AT 505772023
(71) Anmelder: TIF GmbH, 39042 Brixen (BZ) (IT)
(72) Erfinder: Gasser, Hannes, 39042 Brixen (BZ) (IT)
(74) Vertreter: Schwarz & Partner Patentanwälte GmbH

(57) **Zusammenfassung**

Verfahren zum kraftschlüssigen Verbinden eines Profils (25) mit einem Bauteil (20), wobei das Profil (25) einen Aufnahmeabschnitt (26) für den zu verbindenden Abschnitt (21) des Bauteils (20) aufweist, wobei der Aufnahmeabschnitt (26) des Profils (25) und der zu verbindende Abschnitt (21) des Bauteils (20) gegeneinandergepresst werden, wobei während des Gegeneinanderpressens Ultraschall
a) auf den Aufnahmeabschnitt (26) des Profils (20) oder
b) auf den zu verbindenden Abschnitt (21) des Bauteils (20) oder
c) auf den Aufnahmeabschnitt (16) des Profils (20) und den zu verbindenden Abschnitt (21) des Bauteils (20)
ausgeübt wird

## Beschreibung

Die vorliegende Erfindung betrifft eine Vorrichtung zum kraftschlüssigen Verbinden eines Profils mit einem Bauteil. Weiters betrifft die Erfindung ein Verfahren zum kraftschlüssigen Verbinden eines Profils mit einem Bauteil.

### HINTERGRUND DER ERFINDUNG

In vielen technischen Gebieten werden Bauteile mit einem Profil verbunden. Ein Einsatzgebiet stellt der Bau von Duschabtrennungen aus Echtglas dar, bei dem eine Glasscheibe als Bauteil seitlich mittels eines Profils aus Metall gehalten wird, wobei das Profil mit der Wand verbunden wird. Nach Stand der Technik werden Bauteil und Profil in der Regel entweder stoffschlüssig - meist durch Verkleben - oder kraftschlüssig bzw. reibschlüssig - durch Aufklopfen, Aufschlagen oder Aufpressen des Profils auf das Bauteil - miteinander verbunden.

Bei der stoffschlüssigen Verbindung stellen die Auswahl und Güte des Fügestoffes einerseits (z.B. Langzeitstabilität, Zähigkeit, Viskosität, etc.) sowie die Qualität und Komplexität der Verfahrensführung des eigentlichen Fügens andererseits große Anforderungen an die ausführenden Personen dar. Im Fall der kraft- bzw. reibschlüssigen Verbindung erfordert das Aufbringen des Profils hohe Schlag- bzw. Presskräfte und ein exaktes Positionieren des Profils mit dem Profilkanal am Bauteil, da ansonsten eine Beschädigung an Profil oder Bauteil auftreten kann. Bei Echtglas kann dies darüber hinaus mit einem Bersten des Bauteils einhergehen. Beim manuellen Aufschlagen des Profils an das Bauteil mit Schlagstück und Hammer durch einen Ausführenden muss zudem berücksichtigt werden, dass dies vom Ausführenden ein hohes Maß an Konzentration, Schlaggenauigkeit und Ausdauer erfordert, bei vergleichsweiser geringer Arbeitsgeschwindigkeit und ebensolchen geringen Arbeitsvolumina.

### KURZE BESCHREIBUNG DER ERFINDUNG

Die vorliegende Erfindung hat es sich zur Aufgabe gestellt, ein Verfahren und eine Vorrichtung zum kraftschlüssigen Verbinden eines Profils mit einem Bauteil bereitzustellen, welches die bekannten Nachteile nach Stand der Technik überwindet. Insbesondere soll die physische Belastung des Ausführenden verringert werden.

Gelöst wird diese Aufgabe durch ein Verfahren zum kraftschlüssigen Verbinden eines Profils mit einem Bauteil, wobei das Profil einen Aufnahmeabschnitt für den zu verbindenden Abschnitt des Bauteils aufweist, wobei der Aufnahmeabschnitt des Profils und der zu verbindende Abschnitt des Bauteils gegeneinandergepresst werden, wobei während des

Gegeneinanderpressens des Aufnahmeabschnitt des Profils gegen den zu verbindenden Abschnitt des Bauteils Ultraschall
a) auf den Aufnahmeabschnitt für den zu verbindenden Abschnitt des Bauteils oder
b) auf den zu verbindenden Abschnitt des Bauteils oder
c) auf den Aufnahmeabschnitt für den zu verbindenden Abschnitt des Bauteils und den zu verbindenden Abschnitt des Bauteils
übertragen wird.

Die Aufgabe wird außerdem gelöst durch eine Vorrichtung zum kraftschlüssigen Verbinden eines Profils mit einem Bauteil, umfassend
- eine Haltevorrichtung für das Bauteil,
- eine Aufnahme für das Profil,
- eine Schiebevorrichtung mit welcher Haltevorrichtung und Aufnahme relativ zueinander bewegbar sind,
wobei zumindest ein Ultraschallaktuator vorgesehen ist, wobei der Ultraschallaktuator an der Haltevorrichtung oder an der Aufnahme derart angeordnet ist, dass damit im Betriebszustand Ultraschall auf einen Aufnahmeabschnitt des in der Aufnahme angeordneten Profils, einen zu verbindenden Abschnitt des in der Haltevorrichtung befindlichen Bauteils oder auf den Aufnahmeabschnitt des Profils und den zu verbindenden Abschnitt des Bauteils ausübbar ist.

Sowohl das Verfahren als auch die Vorrichtung werden nachfolgend gemeinsam beschrieben. Aus Gründen der Übersichtlichkeit werden das Verfahren, das Bauteil, das Profil und die Vorrichtung gleichzeitig beschrieben.

Die Erfindung beruht auf der Idee einer neuartigen Presstechnik zum kraftschlüssigen Verbinden des Profils mit dem plattenförmigen Bauteil. Bei dieser ist es nicht mehr notwendig, dass mit Schlagstücken oder Hämmern hohe Kräfte auf das Bauteil oder das Profil ausgeübt werden, sondern es wird lediglich durch Anlagen eines Ultraschallaktuators auf den Aufnahmeabschnitt des Profils und/oder den zu verbindenden Abschnitt des Bauteils Ultraschall übertragen. Dadurch wird das Profil oder das Bauteil im zu verbindenden Abschnitt in Schwingung versetzt. Somit kann mit sehr geringem Kraftaufwand das Profil gegen das Bauteil gedrückt werden und der Aufnahmeabschnitt des Profils verbindet sich mit dem zu verbindenden Abschnitt des Bauteils kraftschlüssig, wobei im Vergleich zum Gegeneinanderpressen ohne Ultraschallübertragung nur ein Bruchteil der Kraft zum Verbinden notwendig ist.

Durch das Anlegen von Ultraschall auf Profil oder Bauteil werden diese in eine Eigenschwingung versetzt, sodass mit verhältnismäßig geringen Arbeitsdrücken an der Schiebevorrichtung das Bauteil auf das Profil aufgeschoben werden kann. Dieser Vorgang nimmt im Gegensatz zu traditionellen Fügetechniken außerdem nur Bruchteile der Zeit in Anspruch, wodurch ein deutlich höheres Arbeitsvolumen realisierbar ist.

Da Ultraschall auch zum Lösen von formschlüssigen Verbindungen verwendet werden kann, ist erfindungsgemäß auch ein Verfahren zum Lösen einer kraftschlüssigen Verbindung eines Profils mit einem Bauteil, insbesondere der vorgenannten Art, wobei das Profil einen Aufnahmeabschnitt für den zu verbindenden Abschnitt des Bauteils aufweist, wobei der Aufnahmeabschnitt des Profils und der zu verbindende Abschnitt des Bauteils formschlüssig verbunden sind, wobei zum Lösen der Verbindung eine Zugkraft zwischen Profil und Bauteil ausgeübt wird, dadurch gekennzeichnet, dass während des Ausübens der Zugkraft
a) auf den Aufnahmeabschnitt des Profils oder
b) auf den zu verbindenden Abschnitt des Bauteils oder
c) auf den Aufnahmeabschnitt des Profils und den zu verbindenden Abschnitt des Bauteils
Ultraschall übertragen wird.

Nachfolgend werden Details der Erfindung - sowohl betreffend das Verfahren als auch betreffend die Vorrichtung gemeinsam näher erläutert.

Der Ultraschallaktuator ist derart ausgebildet, dass damit Ultraschall in einem Teilbereich des Frequenzbereichs von 20 kHz bis 1 GHz abgebbar ist, vorzugsweise 20 kHz ± 1 kHz bis 1 GHz. Der Ultraschallaktuator kann also Ultraschall mit einer Frequenz von >= 20 kHz abgeben, wobei der Ultraschallaktuator den gesamten Ultraschallfrequenzbereich von 20 kHz bis 1 GHz oder nur ein Frequenzfenster im Frequenzbereich 20 kHz bis 1 GHz abdecken kann. Ein bevorzugter Frequenzbereich für das Verfahren und die Vorrichtung kann zwischen 20 kHz (± 1 kHz) und 100 kHz liegen, sodass der Ultraschallaktuator irgendwo im Bereich 20 kHz bis 100 kHz Ultraschall abgeben kann. Besonders bevorzugt ist der Ultraschallaktuator so ausgebildet, dass er Schall mit einer Frequenz von ca. 20 kHz (± 1 kHz) abgeben kann. Das Verfahren wird besonders bevorzugt bei ca. 20 kHz, vorzugweise ± 1 kHz, ausgeführt.

Der Ultraschallaktuator kann von einem Generator angesteuert werden. Dies ist vorteilhaft, wenn mehrere Ultraschallaktuatoren vorgesehen sind. Bei längeren Profilen kann so gleichmäßig und an mehreren Stellen der Ultraschall auf das Profil übertragen werden.

Bevorzugt ist vorgesehen, dass der Ultraschallaktuator an der Schiebevorrichtung angeordnet ist. Auf diese Art kann unmittelbar Ultraschall auf das Metallprofil oder das Bauteil ausgeübt werden. Dabei drückt letztlich der Ultraschallaktuator das Profil auf das Bauteil auf und es versetzt der Ultraschallaktuator das Profil und das Bauteil gleichzeitig in Schwingung. Wenn ein Generator vorgesehen ist, wird der mindestens eine Ultraschallaktuator an der Schiebevorrichtung angesteuert, während die Schiebevorrichtung das Profil mit seiner offenen Nut gegen das Bauteil drückt.

In einer Ausführungsvariante kann die Schiebvorrichtung einen Druckzylinder aufweisen, mit welchem ein in die Aufnahme eingelegtes Profil gegen ein in die Haltevorrichtung eingelegtes Bauteil bewegbar ist, wobei vorzugsweise der Ultraschallaktuator am Druckzylinder angeordnet oder in den Druckzylinder integriert ist. Diese Ausführungsvariante ist besonders geeignet, wenn mehrere Ultraschallaktuatoren vorliegen, die jeweils in die Schiebevorrichtung integriert sind oder an der Schiebevorrichtung angebracht sind.

Der Druckzylinder kann pneumatisch betätigbar sein. Es ist aber auch eine andere Form des Druckaufbaus im Druckzylinder, wie zum Beispiel hydraulisch oder durch Linearmotor denkbar. Im Moment der Berührung drückt der Druckzylinder das Profil auf das Bauteil (z.B. aus Glas) während das Profil entsprechend in Schwingung versetzt wird. Nach vollständigem Aufschieben des Profils wird der Ultraschallaktuator abgeschaltet. Ab jetzt ist das Profil mit dem Bauteil kraft- und reibschlüssig verbunden. Dies wird z.B. durch eine Vorspannung des Kanals im Profil im Vergleich zur Dicke des Bauteils erreicht.

Weiters kann vorgesehen sein, dass das Bauteil von der Haltevorrichtung durch einen Anschlag gehalten wird. Auf diese Art wird das Bauteil in der Vorrichtung fixiert und das Profil gegen das Bauteil gedrückt, was die sicherste Art darstellt, um Spannungen im Bauteil bei der Verbindung mit dem Profil zu vermeiden.

Weiters kann ein vorderer, vorzugsweise absenkbarer, Anschlag zur Ausrichtung des Bauteils vorgesehen sein. Das vorzugsweise plattenförmige Bauteil kann in diesem Ausführungsbeispiel über eine Transportstrecke manuell oder automatisch zugeführt werden und mittels hinterem Anschlag auf einen oder mehrere vordere Anschläge geschoben werden, an denen das Bauteil ausgerichtet wird. Außerdem wird auf diese Art das Bauteil in der Vorrichtung fixiert und das Profil auf das Bauteil gedrückt, was die sicherste Art darstellt, um Spannungen im Bauteil bei der Verbindung mit dem Profil zu vermeiden. Anschließend werden die vorderen Anschläge versenkt, um den Aufpressweg freizugeben. Danach wird das Metallprofil eingelegt.

Das Einlegen des Profils kann manuell oder automatisiert erfolgen. Das Profil kann z.B. in einem Magazin gelagert sein und z.B. automatisch in die Aufnahme rutschen, indem z.B. eine Schiene für das Profil und ein Gefälle vorgesehen sind. In einer Ausführungsvariante ist eine Greifeinheit vorgesehen, mit welcher das Profil in die Aufnahme einlegbar ist.

Um Profile unterschiedlicher Querschnitte einlegen zu können, kann die Schiebevorrichtung mit einem Wechselsystem ausgestattet sein. Im Fall einer automatischen Zuführung des/der Profil(e), kann das Wechselsystem ebenfalls automatisiert sein. Das Wechselsystem kann an Druckköpfen der Schiebevorrichtung positioniert sein. Das Wechselsystem kann mit verschiedenen Anschlägen zur Positionierung des Profils ausgestattet sein.

Weiters kann eine Fördereinrichtung vorgesehen sein, mit welcher ein Bauteil in die Haltevorrichtung einschiebbar und aus der Haltevorrichtung ausschiebbar ist. Das ausgeschobene Bauteil ist dann bereits mit einem Profil bestückt. Derart kann das Verfahren vollautomatisiert ablaufen.

Da die Anwendung von Ultraschall auch zum Lösen von kraftschlüssigen Verbindungen geeignet ist, lässt sich die Vorrichtung auch zum Lösen einer kraftschlüssigen Verbindung adaptieren. Hierfür kann eine Zugeinrichtung am Ultraschallaktuator vorgesehen sein. Der Ultraschallaktuator kann dann Ultraschall und gleichzeitig Zug auf das Profil ausüben, sodass die Verbindung gelöst wird.

Generell ist das Bauteil zumindest im Bereich des zu verbindenden Abschnitts plattenförmig, vorzugsweise ist das Bauteil insgesamt plattenförmig. Das Verfahren und die Vorrichtung sind für verschiedene Bauteile geeignet, bevorzugt allerdings für Glasbauteile.

In einem bevorzugten Ausführungsbeispiel ist vorgesehen, dass zumindest der Aufnahmeabschnitt des Profils aus Metall besteht und / oder der zu verbindenden Abschnitt des Bauteils Glas ist. Bevorzugt ist das Profil ein Aluminiumprofil und das Glas des Bauteils eine Echtglasscheibe.

Sowohl für Verfahren als auch für die Vorrichtung gilt, dass der Aufnahmeabschnitt des Profils vorzugsweise nutförmig ausgebildet ist, besonders bevorzugt etwa U-förmig im Querschnitt. Der zu verbindende Abschnitt des Bauteils weist die passende Feder auf bzw. ist kongruent zum U-förmigen Abschnitt.

In einer Ausführungsvariante sind der zu verbindende Abschnitt des Bauteils und der nutförmige Aufnahmeabschnitt form- und kraftschlüssig zueinander. Im Bereich des Umfangs der Nut befinden sich bei verbundenem Bauteil und Profil keine Spalten zwischen Bauteil und Profil.

In einer weiteren Ausführungsvariante sind der zu verbindende Abschnitt des Bauteils und der nutförmige Aufnahmeabschnitt des Profils kraftschlüssig zueinander ausgebildet, wobei im Bereich der Nut Vorsprünge vorgesehen sind. Die Vorsprünge können z.B. Noppen sein oder die Vorsprünge können durch eine Aufrauhung der Nutfläche gebildet sein. Z.B. können abschnittsweise Noppen an gegenüberliegenden, parallelen Nutwänden vorgesehen sein. Dies ist bei sehr glatten Bauteilen wie Glasbauteilen vorteilhaft, da so ein besserer Kraft- bzw. Reibschluss erzielt werden kann. Der Abstand zwischen an den Nutflächen gegenüberliegenden Vorsprüngen ist in diesem Fall etwas geringer als die Dicke des Bauteils im Aufnahmeabschnitt des Profils. Die Vorsprünge können als konvexe und / oder quadratische Erhebungen auf jeder Seite der gegenüberliegenden, parallelen Nutwänden ausgebildet sein. Die Erhebungen haben den Sinn, die Pressung auf das Glas zu erhöhen.

Sollte zwischen Bauteil und Profil ein Spiel, d.h. ein Spalt, vorhanden sein, kann auch eine Einlage zwischen Bauteil und Profil vorgesehen werden. Die Einlage könnte z.B. als Keder ausgebildet sein. Die Einlage kann z.B. aus Kautschukgummi oder Kunststoff bestehen. Die Funktion der Einlage ist es, den Reibschluss zwischen Bauteil und Profil zu gewährleisten.

### DETAILLIERTE BESCHREIBUNG DER ERFINDUNG

Weitere Vorteile und Details der Erfindung werden anhand von Beispielen, Figuren und der Beschreibung der Figuren erläutert.
- Fig. 1a bis 1c: zeigen ein Bauteil (Fig. 1a), ein Profil (1b) und das kraftschlüssig verbundene Bauteil samt Profil (Fig. 1c).
- Fig. 2: zeigt eine Draufsicht aus eine Vorrichtung gemäß der Erfindung.
- Fig. 3: zeigt eine Detailansicht der Vorrichtung aus Fig. 2.

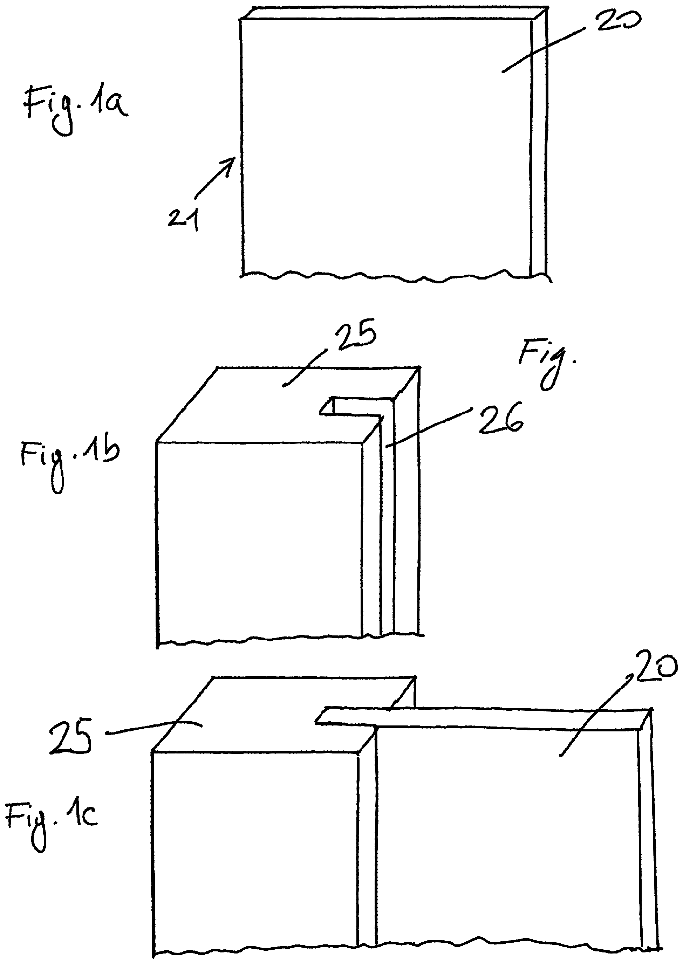

In Fig. 1a ist ein Bauteil 20 gezeigt, welches im Rahmen des erfindungsgemäßen Verfahrens oder mit einer erfindungsgemäßen Vorrichtung mit einem Profil 25 (Fig. 1b) kraftschlüssig verbunden wird. Das mit dem Profil 25 verbundene Bauteil 20 ist in Fig. 1c gezeigt.

Das Bauteil 20 ist im gezeigten Ausführungsbeispiel plattenförmig ausgebildet. Da bei diesem Ausführungsbeispiel das gesamte Bauteil 20 plattenförmig ausgebildet ist, ist auch der mit dem Profil 25 zu verbindende Abschnitt 21 plattenförmig ausgebildet. Das gesamte Bauteil 20 kann z.B. aus Vollglas ausgebildet sein und als Duschabtrennung dienen. Damit das Bauteil 20 als Duschabtrennung einsetzbar ist, wird es mit dem Profil 25 kraftschlüssig verbunden, wobei das Profil 25 an der dem Bauteil gegenüberliegenden Seite mit einer Wand verbunden wird.

Das Profil 25 weist einen Aufnahmeabschnitt 26 auf, der im Ausführungsbeispiel eine Nut bzw. einen Kanal bildet. Die Nut ist etwa U-förmig ausgebildet und kann den zu verbindenden Abschnitt 21 des Bauteils 20 aufnehmen. Dazu ist der zu verbindende Abschnitt 21 des Bauteils 20 als eine zur Nut passende Feder ausgebildet. Der zu verbindenden Abschnitt 21 des Bauteils 20 und der nutförmige Aufnahmeabschnitt 26 sind im gezeigten Ausführungsbeispiel etwa form- und kraftschlüssig ausgebildet. Damit ist gemeint, dass mit Verbinden von Bauteil 20 und Profil 25 im Bereich der Verbindung keine Spalten mehr vorhanden sind. Hierfür sind der nutförmige Aufnahmeabschnitt 26 und der verbindende Abschnitt 21 formschlüssig und spaltfrei. Die Ausnehmung des nutförmigen Aufnahmeabschnitts 26 ist daher geringfügig dünner als die Dicke des verbindenden Abschnitts 21.

In einer nicht gezeigten Ausführungsvariante ist die Nut nicht als reines "U" ausgeführt, sondern verfügt über Vorsprünge auf jeder Seite der parallelen Schenkel des U. Diese Erhebungen erhöhen die Kraft auf das Bauteil 20. In diesem Fall ist auch keine formschlüssige Verbindung mehr zwischen Bauteil 20 und Profil 25 gegeben.

Das mit dem Profil 25 verbundene Bauteil 20 ist in Fig. 1c gezeigt und im Bereich des Umfangs der Nut befinden sich keine Spalten zwischen Bauteil 20 und Profil 25. Die Verbindung zwischen Profil 25 und Bauteil 20 wird nach Stand der Technik so erzielt, dass das Bauteil 20 mit dem zu verbindenden Abschnitt 21 und der Aufnahmeabschnitt 26 des Profil 25 passend aneinandergereiht und kontaktiert, d.h. positioniert, werden und dass anschließend mit Schlagwerkzeugen auf die Rückseite des Profils 25 geschlagen wird, um den zu verbindenden Abschnitt 21 des Bauteils 20 in den Aufnahmeabschnitt 26 einzudrücken.

Erfindungsgemäß sieht das Verfahren zum kraftschlüssigen Verbinden des Profils 25 mit dem Bauteil 20 vor, dass das Profil 25 mit dem Aufnahmeabschnitt 26 mit dem zu verbindenden Abschnitt 21 des Bauteils 25 aneinandergereiht, kontaktiert und nur leicht gegeneinandergepresst werden, wobei während des Gegeneinanderpressens Ultraschall auf den Aufnahmeabschnitt 26 für den zu verbindenden Abschnitt 21 des Bauteils 20 oder auf den zu verbindenden Abschnitt 21 des Bauteils 20 oder auf beide Teile ausgeübt wird.

Beim erfindungsgemäßen Verfahren werden keine Schlagwerkzeuge oder Hämmer, die hohe Kräfte auf das Bauteil 20 oder das Profil 25 ausüben, benötigt. Es wird lediglich durch Anlagen eines Ultraschallaktuators 4 auf den Aufnahmeabschnitt 26 des Profils 25 und/oder den zu verbindenden Abschnitt 21 des Bauteils 20 Ultraschall übertragen. Dadurch werden das Profil 25 und/oder das Bauteil 20 im zu verbindenden Abschnitt 21 - in der Regel beide - in Schwingung versetzt. Wenn nun mit geringem Kraftaufwand - d.h., dass im Vergleich zum Gegeneinanderpressen ohne Ultraschallübertragung nur ein Bruchteil der Kraft notwendig ist - das Profil 25 gegen das Bauteil 20 gedrückt wird, verbindet sich der Aufnahmeabschnitt 26 des Profils 25 mit dem zu verbindenden Abschnitt 21 des Bauteils kraftschlüssig. Nach Entfernen des Ultraschallaktuators 4 können Bauteil 20 und Profil 25 nur mehr schwer gelöst werden. Allerdings lässt sich die Verbindung durch Anlegen von Ultraschall im Bereich der Verbindung mit geringem Kraftaufwand wieder lösen.

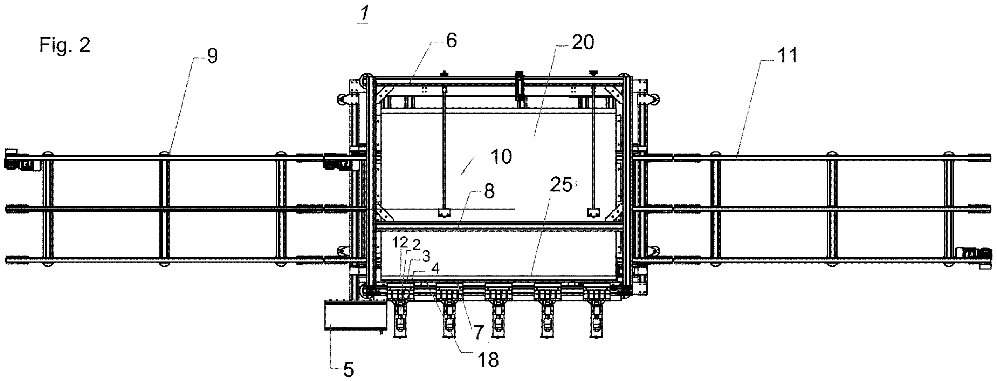

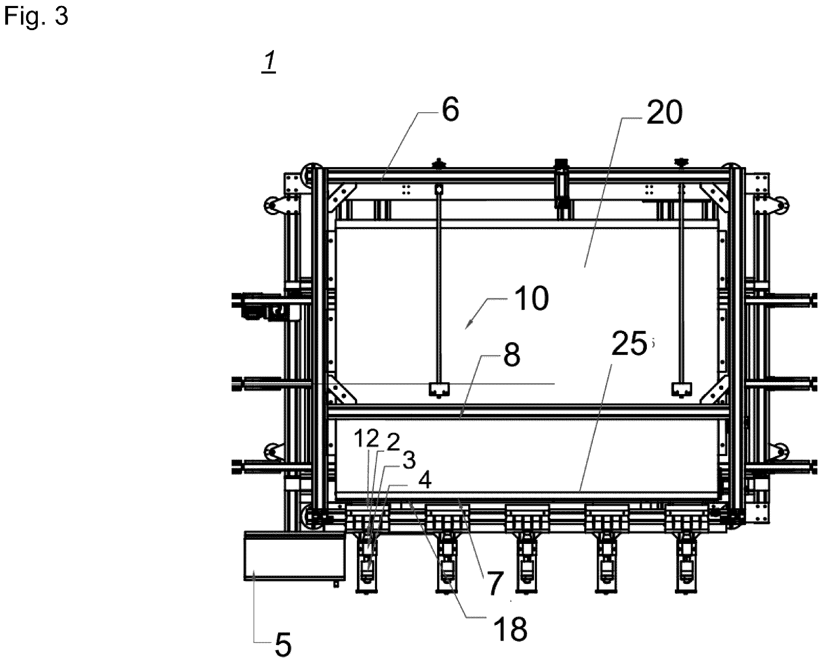

Unter Bezugnahmen auf die Fig. 2 und 3 wird nachfolgend eine erfindungsgemäße Vorrichtung 1 beschrieben, mit welcher ein Bauteil 20 nach Fig. 1a mit einem Profil 25 nach Fig. 1b kraftschlüssig verbunden werden kann. Die Vorrichtung 1 umfasst eine Haltevorrichtung 6 für das Bauteil 20. Die Haltevorrichtung 6 umfasst einen Arbeitstisch 10, auf dem das Bauteil 20 ablegbar ist. Weiters umfasst die Haltevorrichtung 6 einen hinteren Anschlag 8 und einen vorderen Anschlag 18. Mit dem hinteren Anschlag 8 wird das Bauteil 20 auf dem Arbeitstisch 10 der Haltevorrichtung 6 fixiert und entsprechend mit dem zu verbindendem Abschnitt 21 zum Profil 25 hin platziert. Gemeinsam mit dem vorderen Anschlag 18 kann das Bauteil 20 auf der Haltevorrichtung 6 platziert und stabilisiert werden. Der vordere Anschlag 18 kann versenkbar ausgebildet sein.

Die Vorrichtung 1 kann im Bereich des Arbeitstisches 10 z.B. rückseitig über ein Lager für Bauteile 20 verfügen und mit geeigneten Mitteln kann ein Bauteil 20 aus dem Lager auf den Arbeitstisch 10 zur Aufnahme 7 bewegt werden.

Die Vorrichtung 1 weist außerdem eine Aufnahme 7 für das Profil 25 auf, um dieses in der Vorrichtung 1 zu platzieren. Mit einer Schiebevorrichtung 12 kann in der Vorrichtung 1 eine Relativbewegung von Bauteil 20 zu Profil 25 realisiert werden, indem die Schiebevorrichtung 12 die Haltevorrichtung 6 und die Aufnahme 7 relativ zueinander bewegbar sind. In dem gezeigten Ausführungsbeispiel kann primär die Aufnahme 7 in Richtung Haltevorrichtung 6 bewegt werden. Es ist aber auch die Bewegung von Haltevorrichtung 6 zur Aufnahme 7 oder die gemeinsame Bewegung von Haltevorrichtung 6 und Aufnahme 7 zueinander möglich.

Weiters ist ein Ultraschallaktuator 4 vorgesehen. Dieser ist im Bereich der Aufnahme 7 angeordnet, damit der Ultraschallaktuator 4 im Betriebszustand Ultraschall auf den Aufnahmeabschnitt 26 des Profils 25 und den zu verbindenden Abschnitt 21 des Bauteils 20 ausüben kann.

Konkret ist der Ultraschallaktuator 4 an der Schiebevorrichtung 12 angebracht. Insgesamt umfasst die Schiebevorrichtung 12 fünf Druckzylinder 3, die pneumatisch betätigbar sind. Der von den Druckzylindern 3 ausgeübte Druck beträgt ca. zwei bis vier bar und hängt von der Dicke des Bauteils 20 ab. Im bevorzugten Anwendungsbeispiel hat sich für Bauteile 20 aus Echtglas bis 8 mm Stärke ein Druck von 3 bar als vorteilhaft erwiesen, dünnere Bauteile 20 aus Glas lassen sich bereits mit 2 bar Anpressdruck aufpressen. Der Ultraschallaktuator 5 ist im Bereich der Druckkopfaufnahme 2 mit Druckköpfen verbunden und wird quasi als Druckkopf auf das Profil 25 gedrückt. Die fünf Ultraschallaktuatoren 4 werden von einem Generator 5 samt Kontrolleinheit angesteuert.

Der Ultraschallaktuator 4 ist derart ausgebildet, dass damit Ultraschall in einem Teilbereich des Frequenzbereichs von 20 kHz bis 1 GHz abgebbar ist. In den Ausführungsbeispielen wurde eine statische Frequenz von 20 kHz angewendet.

In Fig. 2 ist außerdem eine Fördereinrichtung erkennbar, mit welcher ein Bauteil 20 von links in Art eines Förderbands in die Haltevorrichtung 6 einschiebbar. Nach Verbinden von Bauteil 20 und Profil 25 kann das Bauteil 20 mit Profil 25 aus der Haltevorrichtung 6 über die Fördereinrichtung ausgeschoben werden. Die Fördereinrichtung umfasst ein Transportband 9 in der Zulaufstrecke und ein Transportband 11 zum Abtransport. Die Transportbänder 9, 11 können mit Rollen versehen sein, damit das Bauteil 20 zum Arbeitstisch 10 hin und vom Arbeitstisch 10 weg gleiten können. Mittels eines Antriebs kann dieser Transport der Bauteile 20 vollautomatisiert ablaufen.

## Patentansprüche

1. Verfahren zum kraftschlüssigen Verbinden eines Profils (25) mit einem Bauteil (20), wobei das Profil (25) einen Aufnahmeabschnitt (26) für den zu verbindenden Abschnitt (21) des Bauteils (20) aufweist, wobei der Aufnahmeabschnitt (26) des Profils (25) und der zu verbindende Abschnitt (21) des Bauteils (20) positioniert und gegeneinandergepresst werden, **dadurch gekennzeichnet, dass** während des Gegeneinanderpressens Ultraschall
a) auf den Aufnahmeabschnitt (26) des Profils (20) oder
b) auf den zu verbindenden Abschnitt (21) des Bauteils (20) oder
c) auf den Aufnahmeabschnitt (16) des Profils (20) und den zu verbindenden Abschnitt (21) des Bauteils (20)
übertragen wird.

2. Verfahren nach Anspruch 1, **dadurch gekennzeichnet, dass** zumindest der Aufnahmeabschnitt (26) des Profils (25) aus Metall besteht und / oder der zu verbindenden Abschnitt (21) des Bauteils (20) Glas ist.

3. Verfahren nach Anspruch 1 oder Anspruch 2, **dadurch gekennzeichnet, dass** der Aufnahmeabschnitt (26) des Profils (25) eine Nut aufweist und dass der zu verbindende Abschnitt (21) des Bauteils (20) kraftschlüssig in die Nut passt.

4. Verfahren zum Lösen einer kraftschlüssigen Verbindung eines Profils (25) mit einem Bauteil (20), insbesondere nach einem der Ansprüche 1 bis 3, wobei das Profil (25) einen Aufnahmeabschnitt (26) für den zu verbindenden Abschnitt (21) des Bauteils (20) aufweist, wobei der Aufnahmeabschnitt (26) des Profils (25) und der zu verbindende Abschnitt (21) des Bauteils (20) formschlüssig verbunden sind, wobei zum Lösen der Verbindung eine Zugkraft auf Profil (25) und Bauteil (20) ausgeübt wird, **dadurch gekennzeichnet, dass** während des Ausübens der Zugkraft zusätzlich Ultraschall
a) auf den Aufnahmeabschnitt (26) des Profils (20) oder
b) auf den zu verbindenden Abschnitt (21) des Bauteils (20) oder
c) auf den Aufnahmeabschnitt (16) des Profils (20) und den zu verbindenden Abschnitt (21) des Bauteils (20) übertragen wird.

5. Vorrichtung (1) zum kraftschlüssigen Verbinden eines Profils (25) mit einem Bauteil (20), umfassend
• eine Haltevorrichtung (6) für das Bauteil (20),
• eine Aufnahme (7) für das Profil (25),
• eine Schiebevorrichtung (12) mit welcher Haltevorrichtung (6) und Aufnahme (7) relativ zueinander bewegbar sind,
**dadurch gekennzeichnet, dass** zumindest ein Ultraschallaktuator (4) vorgesehen ist, wobei der Ultraschallaktuator (6) an der Haltevorrichtung (6) oder an der Aufnahme (7) derart angeordnet ist, dass damit im Betriebszustand Ultraschall auf einen Aufnahmeabschnitt (26) des Profils (25), einen zu verbindenden Abschnitt (21) des Bauteils (20) oder auf den Aufnahmeabschnitt (26) des Profils (25) und den zu verbindenden Abschnitt (21) des Bauteils (20) ausübbar ist.

6. Vorrichtung nach Anspruch 5, **dadurch gekennzeichnet, dass** der Ultraschallaktuator (4) derart ausgebildet ist, dass damit Ultraschall in einen Teilbereich des Frequenzbereichs von 20 kHz bis 1 GHz abgebbar ist.

7. Vorrichtung nach Anspruch 5 oder Anspruch 6, **dadurch gekennzeichnet, dass** der Ultraschallaktuator an der Schiebevorrichtung (12) angeordnet ist.

8. Vorrichtung nach Anspruch 7, **dadurch gekennzeichnet, dass** die Schiebevorrichtung (12) einen Druckzylinder (3) aufweist, mit welchem ein in die Aufnahme (7) eingelegtes Profil (25) gegen ein in die Haltevorrichtung eingelegtes Bauteil (20) bewegbar ist, wobei vorzugsweise der Ultraschallaktuator (4) am Druckzylinder (3) angeordnet oder in den Druckzylinder (3) integriert ist.

9. Vorrichtung nach einem der Ansprüche 5 bis 8, **dadurch gekennzeichnet, dass** das Bauteil (20) von der Haltevorrichtung (6) durch einen Anschlag (8, 18) gehalten wird.

10. Vorrichtung nach einem der Ansprüche 5 bis 9, **dadurch gekennzeichnet, dass** eine Fördereinrichtung (14) vorgesehen ist, mit welcher ein Bauteil (20) in die Haltevorrichtung (6) einschiebbar und aus der Haltevorrichtung (6) ausschiebbar ist.

11. Vorrichtung nach einem der Ansprüche 5 bis 10, **dadurch gekennzeichnet, dass** eine Greifeinheit vorgesehen ist, mit welcher das Profil (25) in die Aufnahme (7) einlegbar ist.

12. Vorrichtung nach einem der Ansprüche 5 bis 11, **dadurch gekennzeichnet, dass** ein Lager für Bauteile (20) vorgesehen ist, welches mit der Haltevorrichtung (6) verbunden ist.

13. Vorrichtung nach einem der Ansprüche 5 bis 12, **dadurch gekennzeichnet, dass** die Haltevorrichtung (6) einen Arbeitstisch (10) zur Ablage eines Bauteils (20), einen hinteren Anschlag (8) zum Halten des Bauteils (20) und einen vorderen, vorzugsweise absenkbaren, Anschlag (18) zur Positionierung des Bauteils (20) aufweist.

14. Vorrichtung nach einem der Ansprüche 5 bis 13, **dadurch gekennzeichnet, dass** eine Zugeinrichtung am Ultraschallaktuator (4) vorgesehen ist.

15. Vorrichtung nach einem der Ansprüche 5 bis 14, **dadurch gekennzeichnet, dass** die Schiebevorrichtung (12) mit einem Wechselsystem ausgestattet ist, vorzugsweise ist das Wechselsystem automatisiert.
